# EUROPEAN PATENT SPECIFICATION

(11) **EP 3 411 332 B1**
(45) Date of publication and mention of the grant of the patent: **10.03.2021**
(21) Application number: 17702840.4
(22) Date of filing: 30.01.2017
(51) Int. Cl.: C01B 39/02, C01B 39/48, B01J 29/76, B01J 37/02, B01D 53/94, C01B 39/04, C01B 39/06

(54) **METHOD FOR THE DIRECT SYNTHESIS OF IRON-CONTAINING AEI-ZEOLITE CATALYST**
VERFAHREN ZUR DIREKTEN SYNTHESE EINES EISENHALTIGEN AEI-ZEOLITH-KATALYSATORS
PROCÉDÉ DE SYNTHÈSE DIRECTE D'UN CATALYSEUR ZÉOLITHE AEI CONTENANT DU FER

(30) Priority: 01.02.2016 DK 201670053
(43) Date of publication of application: 12.12.2018
(73) Proprietor: UMICORE AG & CO. KG, 63457 Hanau-Wolfgang (DE)
(72) Inventor: MARTÍN GARCÍA, Nuria, 46022 Valencia (ES); MOLINER MARÍN, Manuel, 46019 Valencia (ES); CORMA CANÓS, Avelino, 46020 Valencia (ES); THØGERSEN, Joakim Reimer, 2970 Hørsholm (DK); VENNESTRØM, Peter Nicolai Ravnborg, 2830 Virum (DK)
(86) International application number: PCT/EP2017/051912
(87) International publication number: WO 2017/134006

(56) References cited:
- WO-A1-2015/084834
- WO-A2-2009/023202
- US-A1- 2014 271 426
- NURIA MARTÍN ET AL: "Efficient synthesis of the Cu-SSZ-39 catalyst for DeNOx applications", CHEMICAL COMMUNICATIONS - CHEMCOM., vol. 51, no. 55, 2 June 2015 (2015-06-02), pages 11030-11033, XP055260185, ISSN: 1359-7345, DOI: 10.1039/C5CC03200H & Nuria Martín ET AL: "Electronic Supplementary Information (ESI) Efficient synthesis of the Cu-SSZ-39 catalyst for DeNOx applications", , 2 June 2015 (2015-06-02), pages 1-10, XP055358801, Retrieved from the Internet: URL:http://www.rsc.org/suppdata/c5/cc/c5cc 03200h/c5cc03200h1.pdf [retrieved on 2017-03-27]

## Description

### Field of the invention

The present invention relates to a method for the direct synthesis of a crystalline zeolite catalyst with the AEI framework structure containing iron-species.

### Background for the invention

Zeolites are microporous crystalline materials formed by corner-sharing TO₄ tetrahedra (T = Si, Al, P, Ti, Ge, Sn etc.) interconnected by the oxygen atoms creating micropores and cavities with uniform size and shape in the molecular dimension range (3-15 Å). Since the micropores are in the same dimensions as small molecules zeolite materials can act as molecular sieves. Isomorphous substitution of tetravalent Si in the zeolite framework with elements with a different valence, e.g. trivalent, state leads to a charge imbalance compensated by a cation (e.g. H⁺, Na⁺, K⁺, Ca²⁺ etc.). Charge-balancing cations can be exchanged by other cations. This is why zeolites can be used in ion-exchange applications. When the charge-balancing ion is a proton, the zeolite can act as solid Brønsted acid. Other metal ions and clusters can also be exchanged into zeolites. Each of these cations can, in combination with the zeolite framework, act as active centers for catalytic reactions. In addition to the exchange of active centers into zeolite extra-framework positions other elements can also be isomorphously substituted into the framework to give catalytically active centers. For the above-mentioned reasons, zeolite and zeotype materials have been broadly applied as excellent catalysts in numerous chemical processes.

Aluminosilicate zeolites and silicoaluminophosphate zeotypes are used as catalyst for SCR of NOx. For NH₃-SCR the zeolite is typically promoted with transition metals. The most common used transition metals are iron and copper and the most commonly tested zeolite frameworks are *BEA, MFI and CHA (all given by the three-letter code devised by the International Zeolite Association).

In general, there are several issues related to the use of metal promoted zeolites as SCR catalysts. First of all, the hydrothermal stability of the zeolite is not always sufficient. Since there will typically be some amount of water present, this, will in combination with high-temperature excursions, lead to dealumination and collapse of the crystalline microporous structure of the zeolite, that will ultimately lead to deactivation of the catalytically active material. Secondly, any hydrocarbons present will adsorb and deactivate the zeolite catalyst. Additionally, the presence of sulfur containing species (e.g. SO₂ and SO₃ etc.) in the system will lead to deactivation of the zeolite catalyst. In addition, formation of unwanted N₂O also occurs. Furthermore, unwanted oxidation of ammonia at higher temperatures also occurs.

In terms of the transition metal introduced into the zeolite it is generally accepted that Cu-promotion leads to a higher NH₃-SCR activity at low temperatures (< 300°C) compared to Fe. However, Cu-promoted materials also produce more N₂O and are less selective for the NH₃-SCR reaction at higher temperatures (> 300°C) due to unselective ammonia oxidation. When it comes to the influence of the transition metal the hydrothermal stability seems to be more dependent on the specific type of zeolite and zeotype framework. For example, Fe-*BEA materials are typically more hydrothermally stable than Cu-*BEA materials, whereas Cu-CHA materials are more hydrothermally stable than Fe-CHA materials [F. Gao, Y. Wang, M. Kollár, N. M. Washton, J. Szanyi, C. H. F. Peden, Catal. Today 2015, 1-12]. It is also generally accepted that Fe-promoted materials produce less N₂O than their Fe-based equivalents [S. Brandenberger, O. Kröcher, A. Tissler, R. Althoff, Catal. Rev. 2008, 50, 492-531].

In the last years, it has been described that copper-containing small-pore aluminosilicate and silicoaluminophosphate Cu-CHA materials, Cu-SSZ-13 and Cu-SAPO-34 respectively, show high catalytic activity and hydrothermal stability for use as NH₃-SCR catalyst [U.S. Patent 7,601,662 B2; European Patent 2150328 B1].

Another zeolite topology is the AEI topology. This structure also exhibits small pores (defined by eight oxygen atoms in micropore windows of the structure), similar to the CHA structure. Thus, without being bound by any theory, some of the benefits from using a CHA zeolite or zeotype should also be present in the use of AEI based zeolite and zeotype. A method of synthesis of aluminosilicate AEI zeolite SSZ-39 was first disclosed in U.S. Patent 5,958,370 using a variety of cyclic and polycyclic quaternary ammonium cation templating agents. U.S. Patent 5,958,370 also claims a process for the reduction of oxides of nitrogen contained in a gas stream in the presence of oxygen wherein said zeolite contains metal or metal ions capable of catalyzing the reduction of the oxides of nitrogen.

U.S. Patent 9,044,744 B2 discloses an AEI catalyst promoted with about one to five weight percent of a promoter metal present. U.S. Patent 9,044,744 B2 is ambiguous about the content of alkali and alkaline earth metals in the zeolite. In the description of U.S. Patent 9,044,744 B2 a certain embodiment is mentioned where the catalyst composition comprises at least one promoter metal and at least one alkali or alkaline earth metal. In another embodiment the catalyst solely contains potassium and/or calcium. However, there is no discussion or mention of the benefits of alkali or alkaline earth metals being present in the catalytic article.

U.S. Patent 20150118134 A1 and [M. Moliner, C. Franch, E. Palomares, M. Grill, A. Corma, Chem. Commun. 2012, 48, 8264-6] teaches that the AEI zeolite framework promoted with copper ions is a stable zeolite NH₃-SCR catalyst system for treating the exhaust gas from an internal combustion engine. The Cu-AEI zeolite and zeotype catalytic system is stable during regeneration of an up-stream particulate filter up to 850° C and water vapour content up to 100%. However, the effect of alkali metals is not discussed. Furthermore, the patent applications is solely concerned about the use of copper as a promoter metal ion, and the effect can therefore not be transferred to catalytic systems with other promoter metal ions.

WO 2015/084834 patent application claims a composition comprising a synthetic zeolite having the AEI structure and an *in situ* transition metal dispersed within the cavities and channels of the zeolite. In situ transition metal refers to a non-framework transition metal incorporated into the zeolite during its synthesis and is described as a transition metal-amine complex. The use of Cu-amine complexes has been extensively described in the last years for the direct synthesis of Cu-containing zeolites, especially Cu-CHA materials [L. Ren, L. Zhu, C. Yang, Y. Chen, Q. Sun, H. Zhang, C. Li, F. Na-waz, X. Meng, F.-S. Xiao, Chem. Commun. 2011, 47, 9789; R. Martínez-Franco, M. Moliner, J. R. Thogersen, A. Corma, ChemCatChem 2013, 5, 3316-3323.; R. Martínez-Franco, M. Moliner, C. Franch, A. Kustov, A. Corma, Appl. Catal. B Environ. 2012, 127, 273-280; R. Martínez-Franco, M. Moliner, P. Concepcion, J. R. Thogersen, A. Corma, J. Catal. 2014, 314, 73-82] and lately also for Cu-AEI materials [R. Martínez-Franco, M. Moliner, A. Corma, J. Catal. 2014, 319, 36-43]. In all cases, the transition metal is stabilized by complexing with a polyamine Martin et al. have shown the direct synthesis of Cu-SSZ-39 by using Cu-TEPA in the reaction mixture [N. Martin et al., Chemical communications 2015, 51, 11030-11033].

In many applications it is beneficial to have a high catalytic activity at temperatures > 300 °C and at the same time have a high selectivity towards the NH₃-SCR reaction without forming nitrous oxide or unselective ammonia oxidation. In such applications iron-promoted zeolites are preferred.

Another benefit of zeolite catalysts is that in some cases they may be able to decompose nitrous oxide at higher temperatures [Y. Li, J. N. Armor, Appl. Catal. B Environ. 1992, 1, L21-L29]. Fe-*BEA zeolites are in general highly active in this reaction [B. Chen, N. Liu, X. Liu, R. Zhang, Y. Li, Y. Li, X. Sun, Catal. Today 2011, 175, 245-255] and should be considered state-of-the-art.

In applications where the catalyst is exposed to high temperatures it is also necessary for the catalyst to maintain the catalytic activity without severe deactivation. Typically, the gas stream wherein the catalyst will be situated contains some amount of water. For this reason, the hydrothermal stability of the catalyst should be high. This is especially detrimental for zeolite-based catalysts as they are known to deactivate due to hydrolysis or degradation of the framework in the presence of steam.

We have found that by decreasing the alkali content in iron promoted AEI zeolites the hydrothermal stability is increased. By decrease of the sodium content, which is naturally present after synthesis of AEI zeolites, the stability of iron-promoted AEI zeolite becomes higher than other zeolite systems with similar iron contents. The zeolite catalyst of the present invention provides improved hydrothermal stability, high selectivity towards selective catalytic reduction, in particular at temperatures above 300 °C and low activity towards unselective ammonia oxidation and formation of nitrous oxide. Additionally, we have found a method for the direct synthesis of iron-promoted AEI zeolites.

### Summary of the invention

Pursuant to the above finding, the present invention provides a method for the direct synthesis of a crystalline material with the AEI framework structure containing iron-species and being essentially free of alkali ions, comprising the following steps:
(i) preparation of a mixture consisting of water, a high-silica zeolite as a main source of silica and alumina, wherein the high-silica zeolite has the FAU framework structure and a Si/Al atomic ratio above 5; an alkyl-substituted cyclic ammonium cation as organic structure directing agent (OSDA), wherein the OSDA is selected from N,N-dimethyl-3,5-dimethylpiperidinium (DMDMP), N,N-diethyl-2,6-dimethylpiperidinium, N,N-dimethyl-2,6-dimethylpiperidinium, N-ethyl-N-methyl-2,6-dimethylpiperidinium, and combinations thereof; a source of iron, wherein the source of iron is an iron salt, and wherein the iron salt is selected from one or more salts of halides, acetates, nitrates, sulfates, and mixtures thereof, and a source of an alkali metal ion [Alk], to obtain a final synthesis mixture having the following molar composition:

   SiO₂: a Al₂O₃ : *b* Fe : *c* OSDA : *d* Alk : e H₂O

   wherein *a* is in the range from 0.001 to 0.2;
   wherein *b* is in the range from 0.001 to 0.2;
   wherein *c* is in the range from 0.01 to 2;
   wherein *d* is in the range from 0.001 to 2;
   wherein *e* is in the range from 1 to 200;
(ii) crystallization of the mixture achieved in (i) ;
(iii) recovery of the crystalline material achieved in (ii);
(iv) calcination of the crystalline material from step (iii)
(v) removal of the alkali metal cation, present in the calcined crystalline material after step (iv), by ion exchange with ammonium ions or hydrogen ions to obtain a final molar composition:

   SiO₂ : *o* Al₂O₃: p Fe : q Alk

   wherein *o* is in the range from 0.001 to 0.2;
   wherein *p* is in the range from 0.001 to 0.2;
   wherein Alk is one or more of alkali ions and wherein q is below 0.02.

The phrase "direct synthesis" as used herein before and in the following shall mean incorporation of the iron source into the zeolite synthesis mixture prepared in step (i).

Specific features of the invention are alone or in combination thereof that:
in the final synthesis mixture, a is in the range from 0.005 to 0.1, *b* is in the range from 0.005 to 0.1, *c* is in the range from 0.1 to 1, *d* is in the range from 0.05 to 1 and *e* is in the range of from 1 to 50;
in the final synthesis mixture, a is in the range from 0.02 to 0.07, *b* is in the range from 0.01 to 0.07, *c* is in the range of from 0.1 to 0.6, *d* is in the range of from 0.1 to 0.8 and e is in the range of from 2 to 20;
the high-silica zeolite has a FAU-type framework structure;
the FAU zeolite is a Y-zeolite with a Si/AI atomic ratio of above 5;
the source of iron is an iron salt;
the iron salt is selected from one or more salts of halides, acetates, nitrates, sulfates and mixtures thereof;
the one or more salts of halides is iron chloride;
the OSDA is selected from N,N-dimethyl-3,5-dimethylpiperidinium (DMDMP), N,N-diethyl-2,6-dimethylpiperidinium, N,N-dimethyl-2,6-dimethylpiperidinium, N-ethyl-N-methyl-2,6-dimethylpiperidinium, and combinations thereof;
the crystallization in step (ii) is performed in an autoclave under static or dynamic conditions at a temperature between 100 and 200°C;
the alkali metal ion is sodium;
the crystallization in step (ii) is performed in an autoclave under static or dynamic conditions at a temperature between 100 to 200°C;
the crystallization temperature is between 130 to 175°C;
crystals of the AEI zeolithic structure are added to the mixture in step (i), in quantities up to 25% by weight with respect to the total amount of oxides;
Step (v) is repeated at least twice in order to decrease the amount of alkali present in the Fe-AEI material.

The iron promoted AEI zeolithic structure as prepared according to this application loses no more than 25 % of its original zeolite micropore volume upon exposure to 10 % water in air at 600 °C for a period of up to 13 hours.

### Brief description of the drawings

Fig. 1 is a Powder X-ray diffraction pattern of as-prepared silicoaluminate AEI zeolite synthesized according to Example 1;
Fig. 2 is a Powder X-ray diffraction pattern of as-prepared direct synthesis of Fe-and Na-containing silicoaluminate AEI zeolite synthesized according to the Example 2;
Fig. 3 is a NOₓ conversion over Fe-AEI zeolite catalyst with and without Na present;
Fig. 4 is a NOₓ conversion over Fe-AEI zeolite catalyst with and without Na present after accelerated hydrothermal aging (conditions given in Example 9);
Fig. 5 is a NOₓ conversion over Na-free Fe-AEI compared to state-of-the-art Fe-CHA and Fe-Beta zeolites (also Na-free) after accelerated hydrothermal aging (conditions given in Example 9);
Fig. 6 is a NOₓ conversion over Na-free Fe-AEI compared to state-of-the-art Na-free Fe-CHA after severe accelerated hydrothermal aging at 600 °C with 100 % H₂O aging; and
Fig. 7 is a SEM image of the Fe-AEI material synthesized according to Example 2;

### Detailed description of the invention

In the synthesis of the AEI structure in its aluminosilicate form (one specific AEI zeolite is known as SSZ-39), a high-silica zeolite as a main source of silica and alumina, wherein the high-silica zeolite has the FAU framework structure and a Si/Al atomic ratio above 5 and an organic structure directing agent (OSDA) are mixed under alkaline conditions. Any recycle from earlier synthesis can also be added to the synthesis mixture. The OSDAs used for the synthesis of the AEI structure in its aluminosilicate form are alkyl-substituted cyclic ammonium cations, wherein the OSDA is selected from N,N-dimethyl-3,5-dimethylpiperidinium (DMDMP), N,N-diethyl-2,6-dimethylpiperidinium, N,N-dimethyl-2,6-dime-thylpiperidinium, N-ethyl-N-methyl-2,6-dimethylpiperidinium, and combinations thereof

The iron source is an iron salt wherein the iron salt is selected from one or more salts of halides, acetates, nitrates, sulfates, and mixtures thereof The resultant iron-containing AEI materials can be calcined with air and/or nitrogen at temperatures between 200 and 700°C.

In order to facilitate the synthesis, crystals of AEI can be added as seeds, in quantities up to 25% by weight with respect to the total of oxides, to the synthesis mixture. These can be added before or during the crystallization process. Mixing of the mentioned constituents to a synthesis mixture is preformed in step (i).

The crystallization, step (ii), is performed in a pressure vessel, such as an autoclave, under static or dynamic conditions. The preferred temperature is ranged from 100 to 200°C, more preferably in the range of 130 to 175°C. The preferred crystallization time is ranged from 6 hours to 50 days, more preferably in the range of 1 to 20 days, and more preferably in the range of 1 to 7 days. It should be taken into consideration that the components of the synthesis mixture may come from different sources, and depending on them, times and crystallization conditions may vary. The resultant crystalline materials are calcined by thermal treatment with air and/or nitrogen at temperatures between 300 and 700°C.

After the crystallization, crystallized material is washed and separated from the mother liquor by decantation, filtration, ultrafiltration, centrifugation, or any other solid-liquid separation technique.

The OSDA, occluded inside the material, is removed in step (iv). This can be performed by extraction and/or thermal treatment at temperatures above 250°C, preferentially between 400 and 750°C, during a period of time between 2 minutes and 25 hours in an atmosphere of air and/or nitrogen.

The material essentially free of occluded OSDA organic molecules obtained in step (iv) is ion exchanged with ammonium or hydrogen to selectively remove the alkali metal cations by cation exchange procedures, step (v). This step can be repeated a number of times to decrease q, the alkali content, to the desired level. The resulting iron-containing AEI material with decreased alkali content can be calcined with air and/or nitrogen at temperatures between 200 and 700°C.

The zeolitic material with the AEI structure containing iron-species as prepared according to the invention has the following molar composition after removal of alkali ions by exchange:

SiO₂ : *o* Al₂O₃: *p* Fe : *q* Alk

wherein *o* is in the range from 0.001 to 0.2; more preferably in the range from 0.005 to 0.1, and more preferably in the range from 0.02 to 0.07.
wherein *p* is in the range from 0.001 to 0.2; more preferably in the range from 0.005 to 0.1, and more preferably in the range from 0.01 to 0.07.
wherein *q* is below 0.02; more preferably below 0.005, and more preferably below 0.001.

The Fe-AEI zeolite catalyst prepared according to this application has a primary crystal size between 0.01 and 20 µm, more preferably a crystal size between 0.1 and 5.0 µm and most preferably crystal size between 0.2 and 2.0 µm.

The iron promoted AEI zeolithic structure as prepared according to this application is hydrothermally stable and loses no more than 25 % of its original zeolite micropore volume upon exposure to 10 % water in air at 600 °C for a period of up to 13 hours.

The Fe-AEI zeolite catalyst prepared according to this application is applicable in heterogeneous catalytic converter systems, such as when the solid catalyst catalyzes the reaction of molecules in the gas phase. To improve the applicability of the catalyst it can be applied in or on a substrate that improves contact area, diffusion, fluid and flow characteristics of the gas stream.

The substrate can be a metal substrate, an extruded substrate or a corrugated substrate. The substrate can be designed as a flow-through design or a wall-flow design.

In the latter case the gas should flow through the walls of the substrate and in this way contribute with an additional filtering effect.

The Fe-AEI zeolite catalyst is present on or in the substrate in amounts between 10 and 600 g/L as measured by the weight of the zeolite material per volume of the total catalyst article, preferably between 100 and 300 g/l.

The Fe-AEI zeolite catalyst is coated onto the substrate using known wash-coating techniques. In this approach the zeolite powder is suspended in a liquid media together with binder(s) and stabilizer(s) where-after the wash coat can be applied onto the walls of the substrate.

In one embodiment the wash coat containing the Fe-AEI zeolite catalyst contains binders based on, but not limited to TiO₂, SiO₂, Al₂O₃, ZrO₂, CeO₂ and combinations thereof.

In another embodiment the Fe-AEI zeolite catalyst is applied in layers onto a substrate in combination with other catalytic functionalities or other zeolite catalysts. One specific combination is with a layer with a catalytic oxidation functionality containing for example platinum or palladium or combinations thereof.

In another embodiment the Fe-AEI zeolite catalyst is applied in zones along the gasflow-direction of the substrate.

The most important field of use of the AEI zeolithic material prepared according to this application is the removal of environmentally harmful nitrogen oxides (NOx = NO and NO₂) from exhaust gasses to avoid them being released into the environment. The primary source of NOₓ is by thermal formation when nitrogen and oxygen reacts at higher temperatures. During combustion processes where oxygen from the air is used, NOₓ is therefore an unavoidable by-product and present in the exhaust gas generated from internal combustion engines, power plants, gas turbines, gas engines and its like. The release of NOₓ is typically regulated by legislation that is becoming increasingly more stringent in most areas around the world. An efficient method to remove NOₓ from exhaust or flue gasses is by selective catalytic reduction where the NOₓ is selectively reduced using ammonia (NH₃-SCR), or a precursor thereof, as reducing agent.

A general issue in the abatement of NOₓ from exhaust or flue gas systems from internal combustion engines, power plants, gas turbines, gas engines and the like is the penalty in pressure drop when a catalytic converter or any other article is introduced into the exhaust or flue gas system. The penalty arises because of the additional pressure required to push the exhaust or flue gas through the catalytic converter. Any decrease in the pressure drop arising from the insertion of the catalytic converter will therefore have a positive influence on efficiency and economy of the process. One method to decrease the pressure drop is by decreasing the size of the catalytic converter without compromising the NOₓ reduction efficiency, which requires the use of a more active catalyst composition. Therefore, any increase in catalyst activity is warranted.

Zeolite-based catalysts offer an alternative to the known vanadium-based SCR catalysts. Promoted with copper, zeolites typically exhibit a higher activity for NH₃-SCR than vanadium-based catalyst at low temperatures (e.g. < 250°C). One limitation of the use of Cu-zeolites is that they do not provide a high NH₃-SCR selectivity at high operational temperatures > approximately 350°C. Iron-promoted zeolites on the other hand offer a high selectivity towards NH₃-SCR at temperatures above 350°C at the expense of high activity at lower temperatures (e.g. around 150-200°C).

Since all combustion processes leads to water being present in the exhaust or flue gas there is a requirement for a high hydrothermal stability of the NH₃-SCR catalyst situated in a system wherefrom NOₓ should be removed. Especially the presence of water in the exhaust or flue gas is detrimental for zeolite-based catalysts since they are known to deactivate due to hydrolysis or degradation of the framework in the presence of steam. Without being bound by any theory we believe this is related to dealumination of the aluminosilicate zeolite and thus will depend on the specific zeolite framework topology as well as the presence and identity of any extra-framework species hosted inside and onto the zeolite.

The Fe-AEI zeolite catalyst obtained by a method according to this application can be applied in the reduction of nitrogen oxides using ammonia as a reductant in the exhaust gas coming from a gas turbine. The catalyst may be placed directly downstream from the gas turbine and thus exposed to an exhaust gas containing water. It may also be exposed to large temperature fluctuations during gas turbine start-up and shut-down procedures.

In certain embodiments, the Fe-AEI zeolite catalyst can advantageously be used in a gas turbine system with a single cycle operational mode without any heat recovery system down-stream of the turbine. When placed directly after the gas turbine the catalyst is able to withstand exhaust gas temperatures up to 650°C with a gas composition containing water.

The Fe-AEI zeolite catalyst can be arranged in a gas turbine exhaust treatment system in combination with a heat recovery system such as a Heat Recovery System Generator (HRSG). In such a layout the Fe-AEI catalyst can be arranged between the gas turbine and the HRSG. In certain other embodiments the Fe-AEI zeolite catalyst can be arranged in several locations inside the HRSG as well.

The Fe-AEI catalyst can be further applied in combination with an oxidation catalyst for treatment of the exhaust gas coming from a gas turbine containing hydrocarbons and carbon monoxide. The oxidation catalyst, typically composed of precious metals, such as Pt and Pd, can be placed either up-stream or down-stream of the catalyst and both inside and outside of the HRSG. The oxidation catalyst can also be combined with the Fe-AEI catalyst into a single catalytic unit.

The oxidation catalyst may be combined directly with the Fe-AEI zeolite by using the zeolite as support for the precious metals. The precious metals may also be supported onto another support material and physically mixed with the Fe-AEI zeolite.

The Fe-AEI zeolite catalyst and oxidation catalyst may be applied in layers onto a substrate such as, but not limited to, a monolithic structure. For example, the zeolite SCR catalyst may be coated or applied in a layer on top of a layer of the oxidation catalyst. The zeolite catalyst can also be placed in a layer below an oxidation layer on the substrate.

The Fe-AEI zeolite catalyst and oxidation catalyst can be coated in different zones on the monolith or down-or up - stream of each other.

The Fe-AEI catalyst can also be combined in zones or layers with other catalytic materials. For example, in certain aspects, the catalyst can be combined with an oxidation catalyst or another SCR catalyst.

The Fe-AEI zeolite catalyst can be applied in the reduction of nitrogen oxides using ammonia as a reductant in the exhaust gas from a gas engine.

The Fe-AEI zeolite catalyst can also be applied in the reduction of nitrous oxide (N₂O) in a flue gas coming from, but not limited to, the production of nitric acid. The catalytic article can decompose nitrous oxide either by direct decomposition, by decomposition assisted by the presence of nitrogen oxides or using a reducing agent such as ammonia.

The Fe-AEI zeolite catalyst can be arranged within a nitric acid production loop to facilitate nitrous oxide removal by functioning in either a secondary or a tertiary abatement setup.

The Fe-AEI zeolite catalyst can be applied in a secondary nitrous oxide abatement setup, where the catalyst is arranged inside an ammonia oxidizer or ammonia burner, immediately after the ammonia oxidation catalyst. In such a setup the catalyst is exposed to high temperatures and catalyst performance can therefore only be achieved using the highly stable Fe-AEI zeolite according to this application.

In another arrangement, the Fe-AEI zeolite catalyst is applied in a tertiary nitrous oxide abatement setup. In this case the catalytic article is located downstream from the ammonia oxidizer or ammonia burner after an absorption loop of the nitrogen dioxide to produce the nitric acid. In this embodiment the catalytic article is part of a two-step process and located up-stream from an NH₃-SCR catalyst to remove the nitrous oxide either by direct decomposition or assisted by nitrogen oxides (NOₓ) also present in the gas stream. The highly stable material described herein will result in long lifetime of a catalyst in such an application. The two catalytic functions (nitrous oxide removal and NH₃-SCR) may also be combined into a one-step catalytic converter. In such a converter the Fe-AEI zeolite catalyst can be applied in combinations with other nitrous oxide removal catalysts or NH₃-SCR catalysts.

In all applications, the Fe-AEI zeolite catalyst prepared according to this application can be applied in or on a substrate such as a monolithic structure a honeycomb structure or it can be shaped into pellets depending on the requirements of the application.

### Examples

### Example 1: Synthesis of AEI zeolite (Na-containing material)

4.48 g of a 7.4%wt aqueous solution of N,N-dimethyl-3,5-dimethylpiperidinium hydroxide was mixed with 0.34 g of a 20%wt aqueous solution of sodium hydroxide (NaOH granulated, Scharlab). The mixture was maintained under stirring 10 minutes for homogenization. Afterwards, 0.386 g of FAU zeolite (FAU, Zeolyst CBV-720 with SiO₂/Al₂O₃=21) was added in the synthesis mixture, and maintained under stirring the required time to evaporate the excess of water until achieving the desired gel concentration. The final gel composition was SiO₂ : 0.047 Al₂O₃ : 0.4 DMDMP : 0.2 NaOH : 15 H₂O. The resultant gel was charged into a stainless steel autoclave with a Teflon liner. The crystallization was then conducted at 135°C for 7 days under static conditions. The solid product was filtered, washed with abundant amounts of water, dried at 100°C and, finally, calcined in air at 550°C for 4 h.

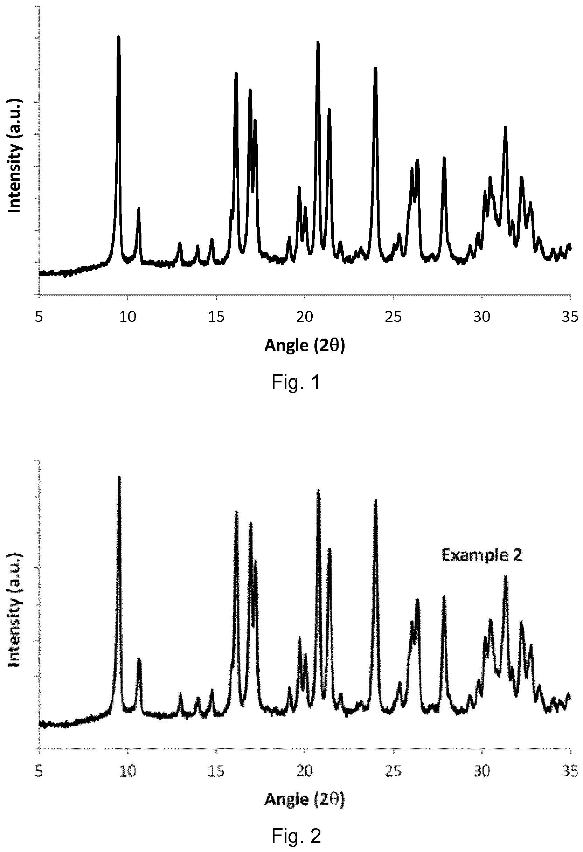

The solid was characterized by Powder X-ray Diffraction, obtaining the characteristic peaks of the AEI structure (see Figure 1). The chemical analysis of the sample indicates a Si/AI ratio of 9.0.

### Example 2: Direct synthesis of the Fe-containing AEI structure (Na-containing material)

1.98 g of a 7.0%wt aqueous solution of N,N-dimethyl-3,5-dimethylpiperidinium hydroxide was mixed with 0.24 g of a 20%wt aqueous solution of sodium hydroxide (NaOH granulated, Scharlab). The mixture was maintained under stirring 10 minutes for homogenization. Afterwards, 0.303 g of FAU zeolite (FAU, Zeolyst CBV-720 with SiO₂/Al2O₃=21) was added in the synthesis mixture. Finally, 0.11 g of a 20%wt aqueous solution of iron (III) nitrate [Fe(NO₃)₃, Sigma Aldrich, 98%] was added, and the synthesis mixture was maintained under stirring the required time to evaporate the excess of water until achieving the desired gel concentration. The final gel composition was SiO₂: 0.047 Al₂O₃ : 0.01 Fe: 0.2 DMDMP : 0.2 NaOH : 15 H₂O. The resultant gel was charged into a stainless steel autoclave with a Teflon liner. The crystallization was then conducted at 140°C for 7 days under static conditions. The solid product was filtered, washed with abundant water, and dried at 100°C. The solid was characterized by Powder X-ray Diffraction, obtaining the characteristic peaks of the AEI structure (see Figure 2). Finally, the as-prepared solid was calcined in air at 550°C for 4 h. The solid yield achieved was above 85% (without taking into account the organic moieties). The chemical analysis of the sample indicates a Si/AI ratio of 8.0, an iron content of 1.1%wt and a sodium content of 3.3%wt.

### Example 3: Synthesis of Fe-containing Na-free AEI zeolite by post-synthetic ion exchange

The Na-containing AEI material from Example 1 was first exchanged with a 0.1 M solution of ammonium nitrate (NH₄NO₃, Fluka, 99 wt%) at 80°C. Then, 0.1 g of ammonium-exchanged AEI zeolite was dispersed in 10 ml of deionized water with pH adjusted to 3 using 0.1 M HNO₃. The suspension was heated to 80°C under nitrogen atmosphere, 0.0002 moles of FeSO₄.7H₂O was then added, and the resultant suspension maintained under stirring at 80°C for 1 h. Finally, the sample was filtered, washed and calcined at 550°C for 4h. The final iron content in the sample was 0.9 wt% and the Na content was below 0.04%wt.

### Example 4: Removal of Na from the direct synthesis of the Fe-containing AEI material from Example 2

200 mg of the calcined Fe-containing AEI material synthesized according to the Example 2, was mixed with 2 ml of a 1 M aqueous solution of ammonium chloride (Sigma-Aldrich, 98%wt), and the mixture was maintained under stirring at 80°C for 2 h. The solid product was filtered, washed with abundant water, and dried at 100°C. Finally, the solid was calcined in air at 500°C for 4 h. The chemical analysis of the sample indicates a Si/AI ratio of 8.0, an iron content of 1.1% wt and sodium content below 0.04%wt.

### Comparative example 5: Direct synthesis of the Fe-containing CHA structure (Na-containing material)

0.747 g of a 17.2%wt aqueous solution of trimethyl-1-adamantammonium hydroxide (TMAdaOH, Sigma-Aldrich) was mixed with 0.13 g of a 20%wt aqueous solution of sodium hydroxide (NaOH, Sigma-Aldrich). Then, 0.45 g of a colloidal suspension of silica in water (40%wt, LUDOX-AS, Sigma-Aldrich) and 23 mg of alumina (75%wt, Condea) were added, and the resultant mixture maintained under stirring for 15 minutes. Finally, 0.458 g of a 2.5%wt aqueous solution of iron (III) nitrate [Fe(NO₃)₃, Sigma Aldrich, 98%] was added, and the synthesis mixture was maintained under stirring the required time to evaporate the excess of water until achieving the desired gel concentration. The final gel composition was SiO₂ : 0.05 Al₂O₃ : 0.01 Fe: 0.2 TMAdaOH : 0.2 NaOH : 20 H₂O. The resultant gel was charged into a stainless steel autoclave with a Teflon liner. The crystallization was then conducted at 160°C for 10 days under static conditions. The solid product was filtered, washed with abundant water, and dried at 100°C. The solid was characterized by Powder X-ray Diffraction, obtaining the characteristic peaks of the CHA zeolite. Finally, the as-prepared solid was calcined in air at 550°C for 4 h. The chemical analysis of the sample indicates a Si/AI ratio of 12.6, an iron content of 1.0%wt and a sodium content of 1.5%wt.

### Comparative example 6: Removal of Na from the direct synthesis of the Fe-containing CHA structure from Example 5

100 mg of the calcined Fe-containing CHA material was mixed with 1 ml of a 1 M aqueous solution of ammonium chloride (Sigma-Aldrich, 98%wt), and the mixture maintained under stirring at 80°C for 2 h. The solid product was filtered, washed with abundant water, and dried at 100°C. Finally, the solid was calcined in air at 500°C for 4 h. The chemical analysis of the sample indicates a Si/AI ratio of 12.6, an iron content of 1.10 %wt and a sodium content of 0.0%wt.

### Comparative example 7: Direct synthesis of the Fe-containing Beta structure (Na-free material)

0.40 g of a 35%wt aqueous solution of tetraethylammonium hydroxide (TEAOH, Sigma-Aldrich) was mixed with 0.34 g of a 50%wt aqueous solution of tetraethylammonium bromide (TEABr, Sigma-Aldrich). Then, 0.60 g of a colloidal suspension of silica in water (40%wt, LUDOX-AS, Sigma-Aldrich) and 18 mg of alumina (75%wt, Condea) were added, and the resultant mixture maintained under stirring for 15 minutes. Finally, 0.33 g of a 5%wt aqueous solution of iron (III) nitrate [Fe(NO₃)₃, Sigma Aldrich, 98%] was added, and the synthesis mixture was maintained under stirring the required time to evaporate the excess of water until achieving the desired gel concentration. The final gel composition was SiO₂ : 0.032 Al₂O₃ : 0.01 Fe: 0.23 TEAOH : 0.2 TEABr: 20 H₂O. The resultant gel was charged into a stainless steel autoclave with a Teflon liner. The crystallization was then conducted at 140°C for 7 days under static conditions. The solid product was filtered, washed with abundant water, and dried at 100°C. The solid was characterized by Powder X-ray Diffraction, obtaining the characteristic peaks of the Beta zeolite. Finally, the as-prepared solid was calcined in air at 550°C for 4 h. The chemical analysis of the sample indicates a Si/AI ratio of 13.1, an iron content of 0.9%wt and a sodium content of 0.0%wt.

### Example 8: Catalytic test of materials in the selective catalytic reduction of nitrogen oxides using ammonia

The activity of selected samples was evaluated in the catalytic reduction of NOₓ using NH₃ in a fixed bed, quartz tubular reactor of 1.2 cm of diameter and 20 cm of length. The catalyst was tested using 40 mg with a sieve fraction of 0.25-0.42 mm. The catalyst was introduced in the reactor, heated up to 550°C in a 300 NmL/min flow of nitrogen and maintained at this temperature for one hour. Afterwards 50 ppm NO, 60 ppm NH₃, 10 %O₂ and 10% H₂O was admitted over the catalyst while maintaining a flow of 300 mL/min. The temperature was then decreased stepwise between 550 and 250°C. The conversion of NO was measured under steady state conversion at each temperature using a chemiluminiscence detector (Thermo 62C).

### Example 9: Accelerated hydrothermal ageing treatment of samples

Selected samples were treated in a gas mixture containing 10% H₂O, 10% O₂ and N₂ for 13 hours at 600°C and afterwards their catalytic performance was evaluated according to Example 8.

### Example 10: Influence of Na on catalytic performance of Fe-AEI before accelerated aging

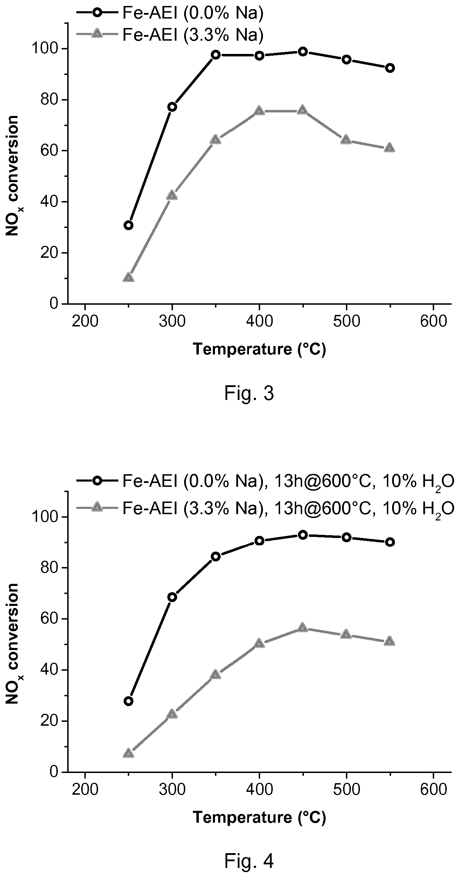

The Fe-AEI zeolite containing Na as synthesized in Example 2 was tested according to Example 8. For comparison the Fe-AEI zeolite that was essentially free of Na, prepared according to Example 4, was also evaluated in the NH₃-SCR reaction according to Example 8. The steady state-conversion of NO is shown as a function of temperature for the two catalysts in Figure 3. The results clearly show the beneficial influence of removing the Na from the Fe-AEI zeolite as the NOₓ conversion increases at all temperatures.

### Example 11: Influence of Na on catalytic performance of Fe-AEI after accelerated hydrothermal aging

The two zeolites that were tested in Example 10 (and prepared in Example 2 and Example 4) were aged under the accelerated aging conditions given in Example 9. The NOₓ conversion after aging is shown in Figure 4.

### Example 12: Catalytic performance of Na-free Fe-AEI compared to state-of the art Fe-Beta and Fe-CHA zeolites after accelerated hydrothermal aging

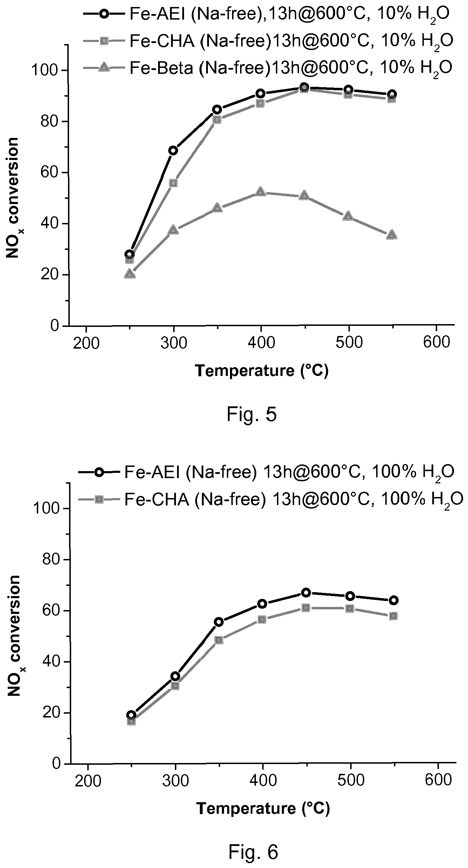

The NOₓ conversion over Na-free Fe-AEI, prepared according to Example 4, was evaluated in the NH₃-SCR reaction after accelerated hydrothermal aging. For comparison Na-free Fe-CHA and Na-free Fe-Beta catalysts (prepared in Example 6 and Example 7, respectively), which represents state-of-the-art iron promoted zeolite catalysts, were also tested after accelerated hydrothermal aging. The measured NOₓ conversion is shown in Figure 5. As can be seen the NOₓ conversion is higher over Na-free Fe-AEI compared to the other zeolites.

### Example 13: Catalytic performance of Na-free Fe-AEI compared to state-of the art Fe-CHA zeolites after severe accelerated hydrothermal aging

A severe accelerated aging of Na-free Fe-AEI and Na-free Fe-CHA prepared in Example 4 and Example 6, respectively, was performed by steaming the catalyst in a muffle furnace with 100 % H₂O for 13 h at 600 °C. Afterwards the samples were evaluated according to Example 8. The NOₓ conversion in the NH₃-SCR reaction over the two Fezeolites is shown in Figure 6. As seen from Figure 6 the improved stability of Fe-AEI is evident from the higher NOₓ seen at all temperatures.

### Example 14: Determination of crystal size

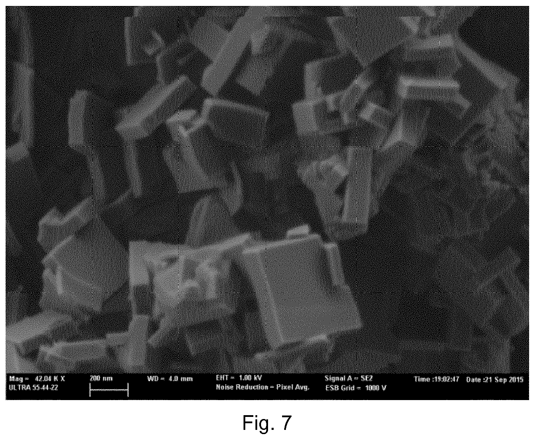

The Fe-containing AEI zeolite prepared in Example 2 was characterized using scanning electron miscoscopy to determine the size of the primary zeolite crystals. Figure 7 shows an image of the obtained material that indicates primary crystallite sizes up to 400 nm.

### Example 15: Measurement of porosity loss during accelerated hydrothermal aging of Fe-AEI zeolites

The surface area and porosity of a sample prepared according to Example 4 and the same sample hydrothermally aged according to Example 9 using nitrogen adsorption. The results are given in Table 1. As seen the surface area and porosity of the Na-free Fe-AEI catalyst is decreased less than 25 % after the accelerated hydrothermal aging treatment.

**Table 1: Surface area and porosity measurement of Na-free Fe-AEI before and after accelerated hydrothermal aging (according to Example 9).**

| **Material** | **BET surface area (m²/g)** | **Micropore area* (m²/g)** | **Micropore vol-ume* (cm³/g)** |
|---|---|---|---|
| Na-free Fe-AEI | 516 | 505 | 0.25 |
| HT AGED Na-free Fe-AEI | 411 | 387 | 0.19 |
| Percentage loss | -20% | -23% | -24% |
| *calculated using the t-plot method | | | |

## Claims

1. A method for the direct synthesis of a crystalline material with the AEI zeolithic structure containing iron-species and being essentially free of alkali ions, comprising the following steps:
(i) preparation of a mixture consisting of water, a high-silica zeolite as a main source of silica and alumina, wherein the high-silica zeolite has the FAU framework structure and a Si/AI atomic ratio above 5; an alkyl-substituted cyclic ammonium cation as organic structure directing agent (OSDA), wherein the OSDA is selected from N,N-dimethyl-3,5-dimethylpiperidinium (DMDMP), N,N-diethyl-2,6-dimethylpiperidinium, N,N-dimethyl-2,6-dime-thylpiperidinium, N-ethyl-N-methyl-2,6-dimethylpiperidinium, and combinations thereof; a source of iron, wherein the source of iron is an iron salt, and wherein the iron salt is selected from one or more salts of halides, acetates, nitrates, sulfates, and mixtures thereof, and a source of an alkali metal ion [Alk], to obtain a final synthesis mixture having the following molar composition:
SiO₂: *a* Al₂O₃ : *b* Fe : c OSDA : *d* Alk : *e* H₂O
wherein *a* is in the range from 0.001 to 0.2;
wherein *b* is in the range from 0.001 to 0.2;
wherein *c* is in the range from 0.01 to 2;
wherein *d* is in the range from 0.001 to 2;
wherein *e* is in the range from 1 to 200;
(ii) crystallization of the mixture achieved in (i);
(iii) recovery of the crystalline material achieved in (ii);
(iv) calcination of the crystalline material from step (iii); and
(v) removal of the alkali metal cation, present in the calcined crystalline material after step (iv) by ion exchange with ammonium ions or hydrogen ions to obtain a final molar composition:
SiO₂ : *o* Al₂O₃ : *p* Fe : *q* Alk
wherein *o* is in the range from 0.001 to 0.2, *p* is in the range from 0.001 to 0.2 and *q* is below 0.02.

2. The method according to claim 1, wherein the FAU zeolite is zeolite-Y.

3. The method according to claim 1 or 2, wherein the alkali metal ion is sodium.

4. The method of any one of claims 1 to 3, wherein the crystallization in step (ii) is performed in an autoclave under static or dynamic conditions at a temperature between 100 to 200°C.

5. The method according to any one of claims 1 to 4, wherein crystals with the AEI zeolithic structure are added to the mixture in step (i), in quantities up to 25% by weight with respect to the total amount of oxides.

6. The method according to any one of claims 1 to 5, wherein step (v) is repeated at least twice.

7. The method according to any one of claims 1 to 6, wherein step (iv) is repeated at least twice.

## Patentansprüche

1. Verfahren zur Direktsynthese eines kristallinen Materials mit der AEI-Zeolith-Struktur, das Eisenspezies enthält und im Wesentlichen frei von Alkaliionen ist, umfassend die folgenden Schritte:
(i) Herstellung einer Mischung, bestehend aus Wasser, einem Zeolithen mit hohem Siliciumdioxidgehalt als Hauptquelle für Siliciumdioxid und Aluminiumoxid, wobei der Zeolith mit hohem Siliciumdioxidgehalt die FAU-Gerüststruktur und ein Si/Al-Atomverhältnis von mehr als 5 aufweist; ein alkylsubstituiertes cyclisches Ammoniumkation als organisches Struktursteuerungsmittel (OSDA), wobei das OSDA ausgewählt ist aus N,N-Dimethyl-3,5-dimethylpiperidinium (DMDMP), N,N-Diethyl-2,6-dimethylpiperidinium, N,N-Dimethyl-2,6-dimethylpiperidinium, N-Ethyl-N-methyl-2,6-dimethylpiperidinium und Kombinationen davon;
eine Eisenquelle, wobei die Eisenquelle ein Eisensalz ist, und
wobei das Eisensalz ausgewählt ist aus einem oder mehreren Salzen von Halogeniden, Acetaten, Nitraten, Sulfaten und Mischungen davon, und einer Quelle eines Alkalimetallions [Alk], um eine finale Synthesemischung mit der folgenden molaren Zusammensetzung zu erhalten:
SiO₂: *a* Al₂O₃: *b* Fe : *c* OSDA : *d* Alk: *e* H₂O
wobei *a* im Bereich von 0,001 bis 0,2 liegt;
wobei *b* im Bereich von 0,001 bis 0,2 liegt;
wobei *c* im Bereich von 0,01 bis 2 liegt;
wobei *d* im Bereich von 0,001 bis 2 liegt;
wobei *e* im Bereich von 1 bis 200 liegt;
(ii) Kristallisierung der in (i) erhaltenen Mischung;
(iii) Gewinnung des in (ii) erhaltenen kristallinen Materials;
(iv) Kalzinieren des kristallinen Materials aus Schritt (iii); und
(v) Entfernen des Alkalimetallkations, das in dem kalzinierten kristallinen Material nach Schritt (iv) vorhanden ist, durch lonenaustausch mit Ammoniumionen oder Wasserstoffionen, um eine finale molare Zusammensetzung zu erhalten:
SiO₂: *o* Al₂O₃: *p* Fe : *q* Alk
wobei *o* im Bereich von 0,001 bis 0,2 liegt, *p* im Bereich von 0,001 bis 0,2 liegt und *q* unter 0,02 liegt.

2. Verfahren nach Anspruch 1, wobei der FAU-Zeolith Zeolith Y ist.

3. Verfahren nach Anspruch 1 oder 2, wobei das Alkalimetallion Natrium ist.

4. Verfahren nach einem der Ansprüche 1 bis 3, wobei die Kristallisation in Schritt (ii) in einem Autoklaven unter statischen oder dynamischen Bedingungen bei einer Temperatur zwischen 100 und 200 °C durchgeführt wird.

5. Verfahren nach einem der Ansprüche 1 bis 4, wobei der Mischung in Schritt (i) Kristalle mit AEI-Zeolith-Struktur in Mengen bis zu 25 Gew.-%, bezogen auf die Gesamtmenge an Oxiden, zugesetzt werden.

6. Verfahren nach einem der Ansprüche 1 bis 5, wobei Schritt (v) mindestens zwei Mal wiederholt wird.

7. Verfahren nach einem der Ansprüche 1 bis 6, wobei Schritt (iv) mindestens zwei Mal wiederholt wird.

## Revendications

1. Procédé pour la synthèse directe d'un matériau cristallin avec la structure zéolitique AEI contenant des espèces de fer et étant pratiquement exempt d'ions alcalins, comprenant les étapes suivantes :
(i) préparation d'un mélange constitué d'eau, d'une zéolite à haute teneur en silice en tant que source principale de silice et d'alumine, dans lequel la zéolite à haute teneur en silice a la structure d'ossature FAU et un rapport atomique Si/AI supérieur à 5 ; un cation ammonium cyclique à substitution alkyle en tant qu'agent directeur de structure organique (OSDA), dans lequel l'OSDA est choisi parmi N,N-diméthyl-3,5-diméthylpipéridinium (DMDMP), N,N-diéthyl-2,6-diméthylpipéridinium, N,N-diméthyl-2,6-diméthylpipéridinium, N-éthyl-N-méthyl-2,6-diméthylpipéridinium, et des combinaisons de ceux-ci ;
une source de fer, dans lequel la source de fer est un sel de fer, et
dans lequel le sel de fer est choisi parmi un ou plusieurs sels d'halogénures, acétates, nitrates, sulfates, et des mélanges de ceux-ci, et une source d'un ion métallique alcalin [Alk], pour obtenir un mélange final de synthèse ayant la composition molaire suivante :
SiO₂ : *a* Al₂O₃ : *b* Fe : *c* OSDA : *d* Alk : *e* H₂O
dans lequel *a* est dans la plage allant de 0,001 à 0,2 ;
dans lequel *b* est dans la plage allant de 0,001 à 0,2 ;
dans lequel *c* est dans la plage allant de 0,01 à 2 ;
dans lequel *d* est dans la plage allant de 0,001 à 2 ;
dans lequel *e* est dans la plage allant de 1 à 200 ;
(ii) cristallisation du mélange obtenu en (i) ;
(iii) récupération du matériau cristallin obtenu en (ii) ;
(iv) calcination du matériau cristallin provenant de l'étape (iii) ; et
(v) élimination du cation de métal alcalin, présent dans le matériau cristallin calciné après l'étape (iv) par échange ionique avec des ions ammonium ou des ions hydrogène pour obtenir une composition molaire finale :
SiO₂ : *o* Al₂O₃ : *p* Fe : *q* Alk
dans lequel *o* est dans la plage allant de 0,001 à 0,2, *p* est dans la plage allant de 0,001 à 0,2 et *q* est inférieur à 0,02.

2. Procédé selon la revendication 1, dans lequel la zéolite FAU est une zéolite-Y.

3. Procédé selon la revendication 1 ou 2, dans lequel l'ion métallique alcalin est du sodium.

4. Procédé selon l'une quelconque des revendications 1 à 3, dans lequel la cristallisation à l'étape (ii) est mise en œuvre dans un autoclave dans des conditions statiques ou dynamiques à une température comprise entre 100 et 200 °C.

5. Procédé selon l'une quelconque des revendications 1 à 4, dans lequel des cristaux avec la structure zéolitique AEI sont ajoutés au mélange à l'étape (i), en des quantités allant jusqu'à 25 % en poids par rapport à la quantité totale d'oxydes.

6. Procédé selon l'une quelconque des revendications 1 à 5, dans lequel l'étape (v) est répétée au moins deux fois.

7. Procédé selon l'une quelconque des revendications 1 à 6, dans lequel l'étape (iv) est répétée au moins deux fois.
